# EUROPÄISCHE PATENTSCHRIFT

(11) **EP 3 323 744 B1**
(45) Veröffentlichungstag und Bekanntmachung des Hinweises auf die Patenterteilung: **02.08.2023**
(21) Anmeldenummer: 16199900.8
(22) Anmeldetag: 21.11.2016
(51) Int. Cl.: B65C 1/02, B65C 9/40

(54) **VERFAHREN UND WIEGE- UND ETIKETTIER-FÖRDERVORRICHTUNG MIT ALTERNIERENDER DRUCKERNUTZUNG**
METHOD AND WEIGHING, CONVEYING AND LABELLING DEVICE WITH ALTERNATING PRINTER USE
PROCÉDÉ ET DISPOSITIF DE PESAGE, TRANSPORT ET ÉTTIQUETAGE AVEC UTILISATION ALTERNATIVE D'IMPRIMANTE

(43) Veröffentlichungstag der Anmeldung: 23.05.2018
(73) Patentinhaber: Bizerba SE & Co. KG, 72336 Balingen (DE)
(72) Erfinder: Pfau, Helmut, 72411 Bodelshausen (DE)
(74) Vertreter: Huber, Meik

(56) Entgegenhaltungen:
- EP-A1- 2 832 651
- DE-U1-202004 009 707
- US-A1- 2005 067 111
- US-A1- 2016 052 659

## Beschreibung

Die vorliegende Erfindung betrifft eine Wäge- und Etikettier-Fördervorrichtungen mit alternierender Druckernutzung und ein Verfahren zum Betrieb einer Wäge- und Etikettier-Fördervorrichtungen mit alternierender Druckernutzung.

Wäge- und Etikettier-Fördervorrichtungen, so genannte Preisauszeichner, zum Etikettieren von Artikeln umfassen ein Wägeband zum Bestimmen eines Gewichtswerts eines Artikels, ein oder mehrere Transportvorrichtungen, ausgebildet als Förderband oder Fördergurt, zum Transportieren eines Artikels, einen Etikettierer mit einem Drucker zum Bedrucken eines Etiketts mit Informationen, insbesondere mindestens eine mit dem Gewichtswert des Artikels im Zusammenhang stehende Information und mit einen Applikator zum applizieren des Etiketts auf dem entsprechenden Artikel. Bei den zu etikettierenden Artikeln handelt es sich insbesondere um Nahrungsmittel in Trayschalen, in Kunststofffolie verpackte Nahrungsmittel, in Kisten oder Schachteln verpackte Nahrungsmittel oder um beliebige Produkte, die in Kunststoff, Papier- oder Karton-verpackungen auf der Wäge- und Etikettier-Fördervorrichtung transportiert werden.

Die US2016/0052659A1 zeigt ein System um mindestens ein Versandetikett auf Packungen zu applizieren, wobei die Packungen über eine Förderstrecke des System laufen. Das System umfasst zwei Drucker, die die Versandetiketten zur Verfügung stellen. Die Versandetiketten können auch an verschiedenen Stellen auf der Packung angebracht werden und können eine unterschiedliche Größe haben. Die Etiketten werden abwechselnd von zwei Etikettierern and die Packungen angebracht. Das System kann außerdem über ein Wiegemodul verfügen.

Der Durchsatz an Artikeln durch die Wäge- und Etikettier-Fördervorrichtung ist oft limitiert durch die Druckgeschwindigkeit, das heißt durch die Zeit, die der Drucker benötigt um ein entsprechendes Etikett für einen Artikel zu drucken. Aus diesem Grund umfassen Wäge- und Etikettier-Fördervorrichtungen, die einen hohen Durchsatz erreichen sollen, zwei Etikettierer und somit zwei Drucker, wobei die Etikettierer jeweils abwechselnd ein Etikett für Artikel in dem Artikelstrom auf der Transportvorrichtung drucken und applizieren, so dass zum Beispiel der erste Etikettierer in der Artikelfolge alle ungeraden Artikel etikettiert und der zweite Etikettierer in der Artikelfolge alle geraden Artikel etikettiert. Beide Etikettierer applizieren dabei ihre Etiketten an der gleichen Stelle auf den Artikeln, zum Beispiel auf der Oberseite oder auf der Unterseite der Verpackung.

Die Wäge- und Etikettier-Fördervorrichtung ist integriert in eine Produktionsanlage. Tritt bei der Wäge- und Etikettier-Fördervorrichtung eine Störung auf, zum Beispiel weil die Etikettenrolle im Drucker leer ist und gewechselt werden muß, so steht bis zum Wechsel der Etikettenrolle durch einen Bediener und somit bis zur Behebung der Störung im Drucker die komplette Produktionsanlage still.

Aufgabe der Erfindung ist es, eine verbesserte Wäge- und Etikettier-Fördervorrichtung vorzuschlagen.

Diese Aufgabe wird durch ein Verfahren zum Betrieb einer Wäge- und Etikettier-Fördervorrichtung nach Anspruch 1 und eine Wäge- und Etikettier-Fördervorrichtung nach Anspruch 4 gelöst.

Ein erfindungsgemäßes Verfahren ist zum Betrieb einer Etikettier-Fördervorrichtung mit einer Transportvorrichtung und einem Etikettiersystem, das drei Etikettierer umfasst, geeignet. Jeder Etikettierer umfasst einen Drucker, einen Applikator, eine Aufnahmeeinrichtung für Etikettenrollen und eine Messeinheit zum Bestimmen der verbleibenden Etiketten auf der Etikettenrolle. Das Verfahren umfasst einen Schritt des Bereitstellens einer Information über den Etikettenvorrat jedes Etikettierers des Etikettiersystems. Dieser Schritt wird einmal beim Start des Verfahrens oder in regelmäßigen Abständen ausgeführt. Gemäß dem erfindungsgemäßen Verfahren werden Artikel etikettiert, wobei die Artikel eine erste Applizierstelle an der gleichen Stelle der Artikel umfassen. Ein erster Etikettierer der sich in einem aktiven Betriebszustand befindet und ein zweiter Etikettierer der sich in einem aktiven Betriebszustand befindet applizieren abwechselnd ein Etikett an der ersten Applizierstelle von aufeinanderfolgenden Artikeln. Der dritte Etikettierer befindet sich dabei in einem passiven Betriebszustand. Der Etikettenvorrat zumindest der aktiven Etikettierer wird periodisch bestimmt. In einer Ausführungsform findet diese Bestimmung des Etikettenvorrats durch Auswertung der Umdrehung der Druckwalze und der Umdrehung der Etikettenrolle statt. In einer Ausführungsform wird beim Verbrauch der Etiketten durch den Etikettierer der aktuelle Etikettenvorrat des Etikettierers aufgrund des Verbrauchs und des ursprünglichen Etikettenvorrats berechnet. Der ursprüngliche Etikettenvorrat steht insbesondere beim Einlegen einer vollen Etikettenrolle fest und kann durch den Bediener eingegeben werden. Das Verfahren berechnet das Verhältnis zwischen den Etikettenvorräten der Etikettierer und stellt das mit einander in Verbindung. Beim Erreichen eines vorbestimmten Verhältnisses der Etikettenvorräte der Etikettierer wird ein Übergangsbetriebs eingeleitet. Im Übergangsbetrieb schaltet der Etikettierer, der sich in einem passiven Betriebszustand befindet, in einen aktiven Betriebszustand und ein Etikettierer, der sich in einem aktiven Betriebszustand befindet, schaltet in einen passiven Betriebszustand. Welcher der beiden Etikettierer in einem aktiven Betriebszustand in den passiven Betriebszustand geschaltet wird bestimmt sich anhand der Etikettenvorräte der beiden aktiven Etikettierer. Nach dem Übergangsbetrieb wird der Normalbetrieb eingeleitet.

Der Übergangsbetrieb wird eingeleitet nachdem ein Etikettierer mit einer neuen Etikettenrolle bestückt wurde. Die Etikettierer mit dem größten und mit dem kleinsten Etikettenvorrat werden in einen aktiven Betriebszustand geschaltet und der Etikettierer mit dem mittleren Etikettenvorrat wird in den passiven Betriebszustand geschaltet. Das hat den Vorteil, dass ein Bediener der die Etikettenrolle wechselt die maximale Zeit zum Wechseln der Etikettenrolle hat. Der Etikettierer, bei dem die Etikettenrolle aufgebraucht ist, kann sich die maximale Zeit im Störzustand befinden, ohne dass ein anderer der beiden Etikettierer in den Störzustand schaltet, das heißt, ohne dass die Etikettenrolle eines zweiten Etikettierers aufgebraucht ist.

Erfindungsgemäß umfasst eine Wäge- und Etikettier-Fördervorrichtung zum Etikettieren von Artikeln eine Wäge-Fördervorrichtung zum Bestimmen des Gewichts der Artikel. Die Wäge- und Etikettier-Fördervorrichtung führt ein erfindungsgemäßes Verfahren aus. Die Wäge-Fördervorrichtung kennt der Fachmann auch unter der Bezeichnung Durchlaufwaage. Die Wäge-Fördervorrichtung bestimmt das Gewicht eines Artikels wenn er mittels der Fördervorrichtung über die Wägevorrichtung geführt wird. Eine Transportvorrichtung bestehend aus einer oder mehrerer Fördervorrichtungen ist zum Transportieren der Artikel vom Anfang der Wäge- und Etikettier-Fördervorrichtung zum Ende der Wäge- und Etikettier-Fördervorrichtung vorgesehen. Die Wäge- und Etikettier-Fördervorrichtung umfasst ein Etikettiersystem zum Etikettieren der Artikel. Das Etikettiersystem besteht aus drei Etikettierern. Jeder Etikettierer umfasst einen Applikator. Jeder Applikator eines jeden Etikettierers ist dazu ausgebildet, an einer ersten Applizierstelle eines Artikels während des Transports des Artikels auf der Transportvorrichtung, ein Etikett applizieren zu können, wobei im laufenden Betrieb nicht jeder Etikettierer des Etikettiersystems tatsächlich auf jeden Artikel ein Etikett appliziert. Das heißt, jeder Etikettierer ist dazu ausgebildet an der gleichen Stelle eines Artikels, der sogenannten ersten Applizierstelle, ein Etikett zu applizieren. Der Fachmann versteht die gleiche Stelle so, dass minimale Abweichungen aufgrund der Toleranzen des Systems ebenfalls als gleiche Stelle angesehen werden. In einem Normalbetrieb der Wäge- und Etikettier-Fördervorrichtung sind zwei Etikettierer des Etikettiersystems in einem aktiven Betriebszustand und ein Etikettierer befindet sich in einem passiven Betriebszustand. Die beiden Etikettierer, die sich im Normalbetrieb im aktiven Betriebszustand befinden, etikettieren aufeinanderfolgende Artikel auf der Transportvorrichtung abwechselnd, wobei das Etikett auf die erste Applizierstelle der Artikel aufgebracht wird. Das heißt, auf aufeinanderfolgende Artikel wird zum Beispiel von einem Etikettierer ein Etikett auf die erste Applizierstelle des ersten, dritten und fünften Artikels appliziert und vom anderen Etikettierer wird ein Etikett auf den zweiten, vierten und sechsten Artikel appliziert, wobei ein dritter Etikettierer vorhanden ist, der ebenfalls dazu ausgebildet ist, ein Etikett auf die erste Applizierstelle der Artikel zu applizieren, wobei sich dieser dritte Etikettierer in einem passiven Betriebszustand, das heißt in einem Standby Betriebszustand befindet und somit keine Etiketten auf die Artikel appliziert. Er dient als Reserve-Etikettierer für die Etikettierer, die sich gerade im aktiven Betriebszustand befinden. Die erfindungsgemäße Wäge- und Etikettier-Fördervorrichtung hat den Vorteil, dass ein höherer Artikeldurchsatz erreicht wird. Maßgebend für den Artikeldurchsatz ist die Druckzeit für die Etiketten. Durch die abwechselnde Nutzung zweiter Etikettierer kann der Artikeldurchsatz erhöht werden. Allerdings steht beim Ausfall eines Druckers, zum Beispiel durch das Ende einer Etikettenrolle, das ganze System der Wäge- und Etikettier-Fördervorrichtung still. Das erfindungsgemäße Etikettiersystem ist so ausgestaltet, dass in diesem Fall ein weiterer Drucker vorhanden ist, so dass der Artikeldurchsatz des Wäge- und Etikettier-Fördervorrichtung nicht reduziert wird und das System nicht still steht.

Bei der erfindungsgemäßen Vorrichtung hat jeder Etikettierer des Etikettiersystems einen Drucker zum Bedrucken der Etiketten. Etiketten können auch teilweise vorgedruckt sein, sodass nur noch ein Teil der Etiketten zum Beispiel mit einer Gewichtsinformation oder einer Information die abhängig vom Gewichtswert ist bedruckt wird. Jeder Etikettierer umfasst eine Etikettenaufnahme zum Aufnehmen einer Etikettenrolle mit mehreren Etiketten. Bei den Etikettenrollen handelt es sich um Papieretiketten, die auf einem Trägerpapier angebracht sind und vorgestanzt sind, um Schmucketiketten, um transparente Etiketten oder um eine Rolle mit Linerless Etiketten, also um einen Endlosstreifen von Etiketten ohne Trägerband.

Des Weiteren umfasst ein Etikettierer eine Messeinheit zum Bestimmen der verbleibenden Etiketten auf der Etikettenrolle. Die Messeinheit umfasst zum Beispiel eine Sensoreinheit, die eine Information über eine Umdrehungszahl der Druckwalze und eine Sensoreinheit, die eine Information über eine Umdrehungszahl der Etikettenrolle oder des Dorns der Etikettenaufnahme, auf dem die Etikettenrolle aufgesteckt ist, zur Verfügung stellt. Die Auswertung dieser Informationen findet in der Messeinheit oder in einer Steuerungseinrichtung der Etikettierer, des Etikettiersystems oder des Wäge- und Etikettier-Fördersystem statt.

Gemäß der Erfindung schaltet das Etikettiersystem in einem Übergangsbetrieb den Betriebszustand von zwei Etikettierern um. Der Etikettierer, der sich vor dem Übergangsbetrieb in einem passiven Betriebszustand befindet, befindet sich nach dem Übergangsbetrieb in einem aktiven Betriebszustand. Einer der Etikettierer, die sich vor dem Übergangsbetrieb in einem aktiven Betriebszustand befinden, befindet sich nach dem Übergangsbetrieb in einem passiven Betriebszustand. Nach dem Übergangsbetrieb befindet sich wieder ein Etikettierer im Standby Modus (passiver Betriebszustand), es ist jedoch ein anderer Etikettierer als vor dem Übergangsbetrieb. Der Übergangsbetrieb dauert nur solange, bis die Betriebszustände der Etikettierer geändert sind. Das heißt, das Etikettiersystem befindet sich in einer Ausführungsform nur wenige Millisekunden im Übergangsbetrieb. Der Übergangsbetrieb führt nicht zu einer Verlangsamung der Frequenz, in denen das Etikettiersystem etikettiert.

Das Wäge- und Etikettier-Fördersystem umfasst eine Steuerungseinrichtung. Die Steuerungseinrichtung weist zwei Etikettierern einen aktiven Betriebszustand und einem Etikettierer einen passiven Betriebszustand zu. Welcher Etikettierer in welchen Betriebszustand versetzt wird hängt vom Etikettenvorrat auf den Etikettenrollen ab sowie von den Betriebszuständen der einzelnen Etikettierer in der Vergangenheit. Die Zuweisung der Betriebszustände folgt entsprechend eines oder mehrerer Steuerungschematas die in der Steuerungseinrichtung hinterlegt sind. Die Steuerungseinrichtung überführt das Etikettiersystem von einem Normalbetrieb in einen Übergangsbetrieb, um die Betriebszustände mindestens eines Etikettierers zu ändern.

In einer Ausführungsform umfasst die Steuerungseinrichtung eine Etikettenvorratsberechnungseinheit. Die Etikettenvorratsberechnungseinheit berechnet für jeden Etikettierer das Verhältnis aus der Anzahl Umdrehungen der Druckwalze der Etikettierer und der Anzahl Umdrehungen der Etikettenrolle. Die Anzahl Umdrehungen beinhalten dabei auch Bruchteile von Umdrehungen. Die Umdrehungszahl der Druckwalze ist proportional zu der bedruckten Etikettenlänge. Wird diese Etikettenlänge von der Etikettenrolle abgewickelt, ergibt sich aus der Anzahl der Umdrehungen der Etikettenrolle, in der Praxis handelt es sich meist um den Bruchteil einer Umdrehung, ein Radius der äußeren Etikettenschicht auf der Etikettenrolle. Somit ergibt sich aus dieser Information der Etikettenvorrat, der noch auf der Etikettenrolle verfügbar ist. Die Steuerungseinrichtung umfasst eine Vergleichseinheit, die die berechneten Etikettenvorräte der Etikettierer des Etikettiersystems unter Berücksichtigung mindestens einer Vergleichsschwelle mit einander vergleicht und/oder die berechneten Etikettenvorräte mit einem unteren Grenzwert vergleicht. Die Vergleichseinheit liefert die zu Grunde liegende Information für die Einleitung des Übergangsbetriebs.

In einer Ausführungsform schaltet ein Etikettierer in einen Störzustand wenn der Etikettenvorrat des Etikettierers erschöpft ist. In einer Ausführungsform steuert die Steuerungseinrichtung die aktiven und passiven Betriebszustände der Etikettierer des Etikettiersystems derart, dass ein Etikettierer die maximale Zeit im Störzustand ist, unter der Bedingung dass die anderen beiden Etikettierer nicht in den Störzustand schalten. Das hat den Vorteil, dass einem Bediener die maximale Zeit zum Wechsel der Etikettenrolle in einem Etikettierer zur Verfügung steht, bevor der Etikettenvorrat eines zweiten Etikettierers aufgebraucht ist. In einer Ausführungsform steuert die Steuerungseinrichtung die aktiven und passiven Betriebszustände der Etikettierer des Etikettiersystems derart, dass bevor ein zweiter Etikettierer in den Störzustand schaltet die maximale Anzahl an Etiketten des Etikettiersystems appliziert wird. Das hat den Vorteil, dass die maximale Anzahl an Etiketten appliziert werden kann, ohne eine neue Etikettenrolle einzulegen, wobei gleichzeitig Artikel im Artikelstrom immer abwechselnd von zwei Etikettierern etikettiert werden. In einer Ausführungsform steuert die Steuerungseinrichtung die aktiven und passiven Betriebszustände der Etikettierer des Etikettiersystems derart, dass nachdem ein erster Etikettierer in den Störzustand schaltet, ein zweiter Etikettierer um eine definierte Umrüstzeit verzögert in den Störzustand schaltet. Das hat den Vorteil, dass berücksichtig wird, wie lange ein Bediener braucht um eine Etikettenrolle eines Etikettierers zu wechseln. Als Umrüstzeit wird die von ihm dafür benötigte Zeit, gegebenenfalls erweitert um eine Sicherheitsmarge, definiert. Der Bediener kann in dieser Zeit die Etikettenrolle wechseln. Im Anschluss ist eine zweite Etikettenrolle zu wechseln. Insofern wird ein Bediener zum Wechseln der Etikettenrolle dann gerufen, wenn er gleich bei zwei Etikettierern die Etikettenrollen hintereinander wechseln kann. Das erhöht die Effizienz des Etikettiersystems.

In einer Ausführungsform umfasst die Wäge- und Etikettier-Fördervorrichtung weitere Etikettierer. Diese Etikettierer, die nicht dem Etikettiersystem aus drei Etikettierern zugehören, applizieren weitere Etiketten auf einem Artikel, jedoch nicht auf der ersten Applizierstelle des Artikels. Zum Beispiel kann es sich bei den weiteren Etikettierern um Bottom-Etikettierer handeln, falls es sich bei den drei Etikettierern des Etikettiersystems um Top-Etikettierer handelt. Zum Beispiel kann es sich bei den weiteren Etikettierern um Top-Etikettierer handeln, falls es sich bei den drei Etikettierern des Etikettiersystems um Bottom-Etikettierer handelt. Handelt es sich bei den drei Etikettierern des Etikettiersystems um Top-Etikettierer, kann es sich bei den weiteren Etikettierern auch um einen Top-Etikettierer handeln, die an einer anderen Stelle auf der Oberseite des Artikels als der ersten Applizierstelle ein Etikett anbringen.

In einer Ausführungsform wird die Information über den Etikettenvorrat jedes Etikettierers des Etikettiersystems beim Start des Systems dadurch generiert, dass jeder Etikettierer eine bestimmte Anzahl Etiketten druckt und dabei die Ermittlung des Etikettenvorrats ausgeführt wird. Das heißt, die Steuerungseinrichtung verbringt alle Etikettierer einmal in kurzen Abständen in die aktiven Betriebszustände um die Etikettenvorräte zu ermitteln. In einer Ausführungsform gibt der Bediener nach Wechsel der Etikettenrolle den Füllstand der Etikettenrolle in der Wäge- und Etikettier-Transportvorrichtung ein. Das macht insbesondere dann Sinn, wenn der Bediener eine volle Etikettenrolle einlegt. Dies ist in der Praxis der Normalfall.

In einer Ausführungsform wird das Erreichen eines unteren Grenzwerts des Etikettenvorrats in mindestens einem Etikettierer festgestellt und eine Zustandsmeldung abgegeben. Der Grenzwert des Etikettenvorrats ist zum Beispiel erreicht, wenn nur noch eine geringe Menge an Etiketten vorhanden ist oder wenn die Etikettenrolle leer ist. Die Zustandsmeldung ist zum Beispiel eine Information die via Email oder SMS an den Bediener weitergeleitet wird um ihm zu signalisieren, dass die Etikettenrolle jetzt oder zumindest bald gewechselt werden muss. Eine Zustandsmeldung ist zum Beispiel auch eine Signallampe an der Etikettier-Transportvorrichtung oder eine Zustandsmeldung auf dem Terminal oder Bediendisplay der Etikettier-Transportvorrichtung.

In einer Ausführungsform wird der Übergangsbetrieb eingeleitet, wenn der Etikettenvorrat eines Etikettierers im aktiven Betriebszustand aufgebraucht ist und im Übergangsbetrieb wird dieser Etikettierer in den passiven Betriebszustand umgeschaltet. Das hat den Vorteil, dass ein Etikettierer dessen Etikettenvorrat aufgebraucht ist in den passiven Betriebszustand geschaltet wird und durch einen Etikettierer ersetzt wird, dessen Etikettenvorrat nicht aufgebraucht ist. So können trotz Ende der Etikettenrolle in einem Etikettierer die Artikel weiterhin mit zwei aktiven Etikettierern abwechselnd etikettiert werden.

In einer Ausführungsform ist das vorbestimmte Verhältnis zum Einleiten des Übergangsbetriebs erreicht, sobald der Etikettenvorrat von mindestens einem der Etikettierer im aktiven Betriebszustand nur noch die Hälfte der Etiketten einer vollen Etikettenrolle erreicht hat. In einer Ausführungsform wird der Übergangsbetrieb dann aber nur eingeleitet, falls gleichzeitig eine Latenzzeit seit dem letzten Übergangsverstrichen ist. Das verhindert dass bei zwei vollen Etikettenrollen, die parallel leer werden und kurz nacheinander die Hälfte der Etiketten einer vollen Etikettenrolle erreichen, der Übergangsbetrieb zweimal hintereinander eingeschaltet wird. Auch dieses Verfahren maximiert die Zeit, die ein Bediener zum Austausch der Etikettenrolle hat.

In einer Ausführungsform wird, falls sich die Etikettenvorräte auf den Etikettenrollen der Etikettierer beim Start unterscheiden, der Etikettierer mit dem kleinsten Etikettenvorrat in den aktiven Betriebszustand verbracht. Falls der zweitkleinste Etikettenvorrat größer als die Hälfte einer vollen Etikettenrolle ist, wird der Etikettierer mit dem zweitkleinsten Etikettenvorrat in den aktiven Betriebszustand verbracht. Falls andererseits der zweitkleinste Etikettenvorrat kleiner als die Hälfte einer vollen Etikettenrolle ist, wird der Etikettierer mit dem größten Etikettenvorrat in den aktiven Betriebszustand verbracht. Falls der Etikettenvorrat des Etikettierers mit dem zweitkleinsten Etikettenvorrat um eine erste Vergleichsschwelle kleiner ist als der Etikettenvorrat des Etikettierers mit dem größten Etikettenvorrat und unter der Hälfte einer vollen Etikettenrolle ist, wird der Übergangsbetrieb eingeleitet. Der Etikettierer mit dem zweitkleinsten Etikettenvorrat wird in einen passiven Betriebszustand umgeschaltet. Die beiden Etikettierer mit dem größten Etikettenvorrat werden, unter Berücksichtigung der Vergleichsschwelle, abwechselnd in den aktiven Betriebszustand verbracht, während gleichzeitig der Etikettierer mit dem kleinsten Etikettenvorrat im aktiven Betriebszustand verbleibt. Somit werden die Etiketten im Etikettierer mit dem kleinsten Etikettenvorrat als erstes aufgebraucht, um diese Etikettenrolle zu wechseln, bevor die anderen Etikettenrollen auch aufgebraucht sind. Die Vergleichsschwelle stellt dabei sicher, dass nicht nach jedem Etikett die beiden Etikettierer mit dem größten Etikettenvorrat wechselseitig vom aktiven in den passiven Betriebszustand umgeschaltet werden.

Z Denkbar wäre auch eine nicht erfindungsgemäße Ausgestaltung, bei welcher die beiden Etikettierer mit dem größten Etikettenvorrat in den aktiven Betriebszustand verbracht und der dritte Etikettierer wird in den passiven Betriebszustand verbracht werden. Falls der Etikettenvorrat eines Etikettierers im aktiven Betriebszustand um eine zweite Vergleichsschwelle kleiner ist als der Etikettenvorrat des Etikettierers im passiven Betriebszustand, wird der Übergangsbetrieb eingeleitet und dieser Etikettierer wird in den passiven Betriebszustand umgeschaltet. Das hat den Vorteil, dass die maximale Anzahl an Etiketten des Etikettiersystem appliziert wird, bevor eine Etikettenrolle durch einen Bediener gewechselt werden muss.

In einer Ausführungsform wird eine Umrüstzeit für den Wechsel der Etikettenrolle bereitgestellt. Die Umrüstzeit ist die Zeit, die ein Benutzer normalerweise maximal zum Wechsel der Etikettenrolle von der Benachrichtigung bis zum durchgeführten Etikettenrollenwechsel braucht. Diese Umrüstzeit kann in einer Ausführungsform auch eine Sicherheitsmarge enthalten. Es wird ein minimaler Etikettenvorrat für den Rollenwechsel aufgrund der Umrüstzeit des Benutzers und der Druckgeschwindigkeit des Etikettierers berechnet. Bei der Druckgeschwindigkeit handelt es sich um die Geschwindigkeit, mit der der Etikettierer tatsächlich derzeit druckt und Etikettenmaterial bei aktuellem Artikeldurchsatz verbraucht. Es handelt sich nicht unbedingt um die maximale Druckgeschwindigkeit des Etikettierers. Der berechnete minimale Etikettenvorrat wird als zweite Vergleichsschwelle definiert. Das hat den Vorteil, dass nachdem ein erster Etikettierer in den Störzustand schaltet, ein zweiter Etikettierer um eine definierte Umrüstzeit verzögert in den Störzustand schaltet. Somit wird ein Bediener benachrichtigt, wenn er eine Etikettenrolle wechseln muss. Ist er mit dem Wechsel der Etikettenrolle fertig, muss er zeitnah eine zweite Etikettenrolle wechseln. Somit muss der Bediener für den Etikettenrollenwechseln von zwei Etikettierern nur einmal zum Etikettiersystem kommen, ohne dass dabei das Etikettiersystem still steht.

Erfindungsgemäß führt die erfindungsgemäße Wäge- und Etikettier-Fördervorrichtung ein beschriebenes Verfahren zum Betrieb einer Etikettier-Fördervorrichtung aus.

Einige Ausführungsformen der Erfindung sind in den Zeichnungen beispielhaft gezeigt und nachfolgend beschrieben. Es zeigen, jeweils in schematischer Darstellung:
- Fig. 1: zeigt eine erfindungsgemäße Wäge- und Etikettier-Fördereinrichtung
- Fig. 2: zeigt ein Blockdiagramm für ein Terminal für eine erfindungsgemäße Wäge- und Etikettier-Fördereinrichtung
- Fig. 3: zeigt ein erfindungsgemäßes Verfahren zum Betrieb einer Etikettier-Fördereinrichtung

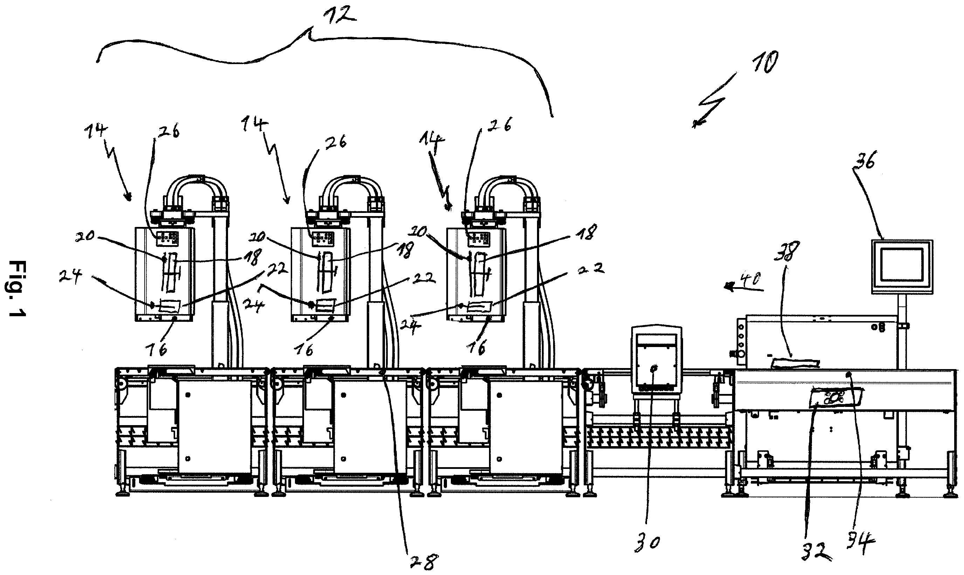

Fig. 1 zeigt eine erfindungsgemäße Wäge- und Etikettier-Fördervorrichtung 10. Die Wäge- und Etikettier-Fördervorrichtung 10 umfasst mehrere Transportbänder, insbesondere einem Wägeband 34, ein oder mehrere Etikettierbänder 28 und mindestens ein Zuführband (nicht gezeigt). Eine Wäge- und Etikettier-Fördervorrichtung 10 kann zusätzlich ein Überwachungssystem 30, zum Beispiel einen Metalldetektor oder ein optisches Überwachungssystem umfassen. Die Wäge- und Etikettier-Fördervorrichtung 10 umfasst eine Wägeeinheit, bestehend aus dem Wägeband 34, welches mit einer Wägezelle 32 verbunden ist, um das Gewicht eines Artikels 38, zum Beispiel einer Trayschale mit Lebensmitteln oder eines anderen Artikels, der gewogen und ausgezeichnet werden soll, zu bestimmen. Das Wägeband 34 bewegt den Artikel 38 in Förderrichtung 40. Die Wäge- und Etikettier-Fördervorrichtung 10 umfasst weiterhin ein Etikettiersystem 12, welches aus drei Etikettierern 14 besteht. Ein Etikettierer 14 umfasst eine Etikettenaufnahme 20 zum Aufnehmen einer Etikettenrolle 18, einen Drucker 22, der eine Druckwalze 24 umfasst, zum Bedrucken eines Etiketts und einen Applikator 16 zum Aufbringen des Etikett auf eine erste Applizierstelle 42 eines Artikels 38. Jeder Etikettierer 14 umfasst eine Bedien- und Steuerungseinrichtung 26. Die Wäge- und Etikettier-Fördervorrichtung 10 umfasst ein Terminal 36 mit einer Steuerungseinrichtung. Das für einen Artikel 38 mithilfe der Wägeeinheit bestimmte Gewicht wird durch einen der Etikettierer 14 des Etikettiersystems 12 auf ein Etikett gedruckt und auf der ersten Applizierstelle 42 des Artikels 38 appliziert. Erfindungsgemäß befindet sich zu einem Zeitpunkt jeweils ein Etikettierer 14 des Etikettiersystems 12 in einem passiven Betriebszustand (Standby) und zwei Etikettierer 14 des Etikettiersystems 12 befinden sich in einem aktiven Betriebszustand. Die Etikettierer 14, die sich im aktiven Betriebszustand befinden, etikettieren einen Strom von Artikeln 38, der über das Etikettierband 28 transportiert wird. Dabei werden die Etiketten an einer ersten Applizierstelle 42 der Artikel 38 angebracht, wobei sich die erste Applizierstelle 42 an einem Artikel 38 immer an der gleichen Stelle befindet, unabhängig davon, mit welchem Etikettierer 14 des Etikettiersystems 12 das Etikett appliziert wird. Die Wäge- und Etikettier-Fördervorrichtung 10 kann weitere Etikettierer (nicht gezeigt) die nicht zu dem Etikettiersystem 12 gehören umfassen. Zum Beispiel kann die Wäge- und Etikettier-Fördervorrichtung 10 ein Etikettiersystem 12 mit drei Top-Etikettierern 14, wie in Fig. 1 gezeigt, umfassen und zusätzlich einen oder mehrere Bottom-Etikettierer umfassen, die ein Etikett auf der Unterseite eines Artikels 38 anbringen. Des Weiteren kann die Wäge- und Etikettier-Fördervorrichtung 10 weitere Top-Etikettierer umfassen, die nicht zum Etikettiersystem 12 gehören und die Etiketten an einer anderen Stelle als der ersten Applizierstelle 42 auf dem Artikel 38 anbringen. In einer Ausführungsform umfasst die Etikettier-Fördervorrichtung keine Wägeeinheit. Das Etikettiersystem 12 druckt in diesem Fall keinen artikelabhängigen Gewichtswert sondern eine Information die für alle Artikel 38 gleich sein kann, zum Beispiel ein Haltbarkeitsdatum oder eine artikelspezifische Information, zum Beispiel eine fortlaufende Nummer.

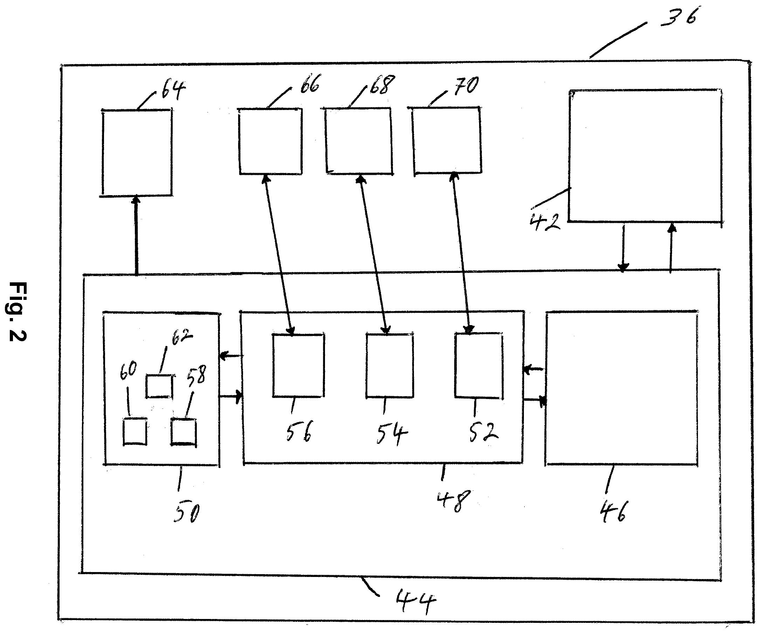

Fig. 2 zeigt schematisch ein Terminal 36 einer Wäge- und Etikettier-Fördervorrichtung 10. Die Funktionsblöcke, die im Terminal 36 dargestellt sind, können ganz oder teilweise in andere Einheiten der Wäge- und Etikettier-Fördervorrichtung 10 ausgelagert sein, zum Beispiel können Funktionsblöcke in der Wägeeinheit oder in dem Etikettiersystem angeordnet sein. Zum Beispiel kann auch ein Etikettierer 14 des Etikettiersystems 12 ein Master-Etikettierer sein, der die Funktion von Funktionsblöcken des Terminals ausführt. Insofern handelt es sich bei Fig. 2 um eine rein schematische Wiedergabe. Das Terminal umfasst ein Display 42 zur Information des Benutzers, das zum Beispiel als LCD Display oder als Touchdisplay ausgeführt ist und somit auch als Eingabegerät dient. Das Terminal 36 umfasst eine Steuerungseinrichtung 44. Die Steuerungseinrichtung umfasst eine Wäge-Steuerungseinrichtung 46 zur Steuerung der Wägeeinheit mit dem Wägeband 34 und zur Auswertung der Gewichtsinformation von der Wägezelle 32. Die Steuerungseinrichtung 44 umfasst eine Etikettiersystem-Steuerungseinrichtung 48 mit Etikettierer-Steuerungseinrichtungen 52, 54, 56, die jeweils einem Etikettierer 14 des Etikettiersystems 12 zugewiesen sind. Die Steuerungseinrichtung 44 umfasst eine Vergleichseinheit 50, in der ein erster Schwellwert 58, ein zweiter Schwellwert 60 und ein unterer Grenzwert 62 hinterlegt sind. Die

Vergleichseinheit 50 vergleicht die Etikettenvorräte der Etikettierer mit dem ersten Schwellwert 58, dem zweiten Schwellwert 60 und/oder dem unteren Grenzwert62 und gibt diese Information an die Etikettensystem-Steuerungseinrichtung 48 zurück.

Die Etikettiersystem-Steuerungseinrichtungen 48 weist in einem Normalbetrieb einem Etikettierer 14 einen passiven Betriebszustand zu und zwei Etikettierern 14 einen aktiven Betriebszustand. Der Etikettierer 14 im passiven Betriebszustand befindet sich im Standby. Die Etikettierer 14 im aktiven Betriebszustand etikettieren die Artikel 38 abwechselnd. Die Etikettierer-Steuerungseinrichtungen 52, 54, 56 sind jeweils über ein Interface 66, 68, 70 mit den Bedien- und Steuerungseinrichtungen 26 der Etikettierern 14 verbunden. Über dieses Interface steuern die Etikettierer-Steuerungseinrichtungen 52, 54, 56 die Etikettierer 14 und empfangen Statusmeldungen der Etikettierer, zum Beispiel den aktuellen Etikettenvorrat oder ob der Etikettierer 14 sich in einem Störzustand befindet, weil der Etikettenvorrat aufgebraucht ist. Diese Information generiert die Bedien- und Steuerungseinrichtung 26 der Etikettierer 14. Die Steuerungseinrichtung 44 gibt bei Erreichen eines unteren Grenzwerts 62 des Etikettenvorrats in mindestens einem Etikettierer eine Zustandsmeldung ab. Die Zustandsmeldung wird durch eine Meldeeinheit 64 zum Beispiel via Email oder SMS an den Bediener weitergeleitet, um ihm zu signalisieren, dass die Etikettenrolle jetzt oder zumindest bald gewechselt werden muss. Eine Zustandsmeldung ist zum Beispiel auch eine Signallampe an der Etikettier-Transportvorrichtung oder eine Zustandsmeldung auf dem Bediendisplay 42 der Etikettier-Transportvorrichtung. Der untere Grenzwert 62 des Etikettenvorrats ist zum Beispiel erreicht, wenn nur noch eine geringe Menge an Etiketten vorhanden sind oder wenn die Etikettenrolle leer ist.

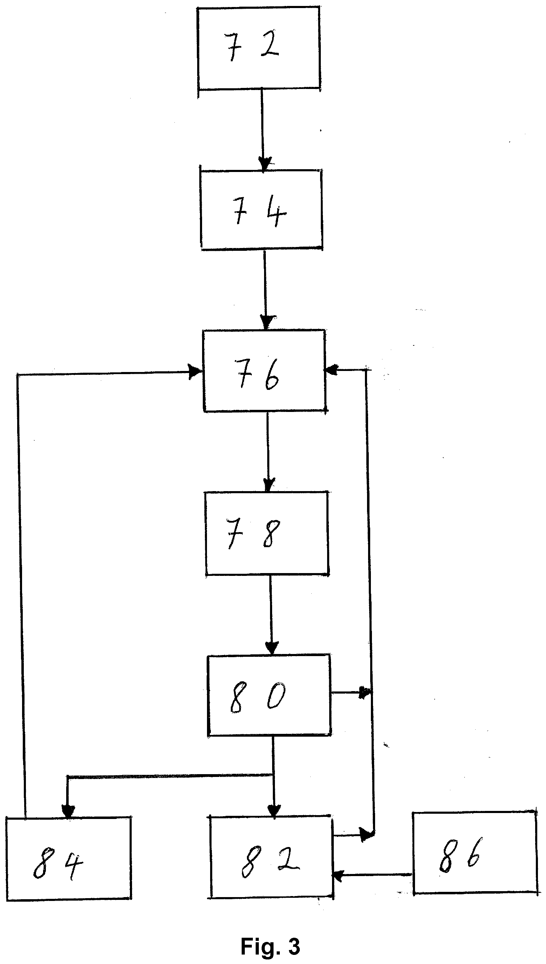

Fig. 3 veranschaulicht das Verfahren zum Betrieb einer Wäge- und Etikettier-Fördervorrichtung 10 mittels eines Flussdiagramms. Dabei werden nur wesentliche Schritte des Verfahrens gezeigt, für die je nach Ausführungsform Abwandlungen beschrieben sind. Außerdem geht die Beschreibung nur auf Verfahrensschritte ein, die zur Auswahl der Etikettierer 14 aus dem Etikettiersystem 12 notwendig sein, ohne auf Details der Umsetzung des wiegens, druckens und applizierens einzugehen. Dem Fachmann ist bekannt, wie dies umgesetzt wird. Ein Verfahren zum Betrieb einer Etikettier-Fördervorrichtung 10 bestimmt in Schritt 72 den Etikettenvorrat jedes Etikettierers 14 des Etikettiersystems 12. Diese Information kann durch einen Bediener eingegeben werden oder zum Beispiel vom letzten Betrieb der Wäge- und Etikettier-Fördervorrichtung 10 gespeichert sein. Der Etikettenvorrat ist alternativ auch bestimmbar, indem mit jedem Etikettierer 14 eine Anzahl Artikel 38 etikettiert werden, das heißt, indem jeder Etikettierer 14 für eine Anzahl Artikel 38 in den aktiven Betriebszustand überführt wird und dabei der Etikettenvorrat berechnet wird.

Zur Bestimmung des Etikettenvorrats in einem Etikettierer 14 wird eine Information über die Umdrehungsanzahl der Druckwalze 24 des Etikettierers 14 mit der Anzahl der Umdrehungen der Etikettenaufnahme 20 und somit der Etikettenrolle 18 ins Verhältnis gesetzt. Aus der Anzahl der Umdrehungen der Druckwalze 24 ist eine Länge des bedruckten Etiketts ableitbar. Aus der Anzahl der Umdrehungen der Etikettenrolle 18, die für diese Etikettenlänge gemacht werden, lässt sich der Durchmesser der Etikettenrolle 18 ableiten. Aus dem Durchmesser der Etikettenrolle 18 ist der Etikettenvorrat ableitbar. Der Fachmann versteht die Anzahl der Umdrehungen der Druckwalze 24 und der Etikettenrolle 18 als eine rationale Zahl, so dass auch Bruchteile von Umdrehungen berücksichtigt werden. Zum Beispiel wird sich im Regelfall für das Bedrucken eines Etiketts die Druckwalze mehrfach drehen, wobei sich die Etikettenrolle 18 und somit die Etikettenaufnahme 20 aufgrund der Größe der Etikettenrolle 18 nur um einen Bruchteil einer Umdrehung dreht. Da der Etikettierer 14 zwischen Etikettenrolle 18 und Drucker 22 eine Führungseinheit für die Etiketten beinhaltet, die federelastisch ist, werden zur genauen Bestimmung des Etikettenvorrats vorzugweise mehrere Etiketten gedruckt und ein Mittelwert aus oben genannten Verhältnis gebildet. Diese Informationen werden in einer Messeinheit verwertet um den Etikettenvorrat eines Etikettierers zu bestimmen. Die Messeinheit befindet sich dabei in der Bedien- und Steuerungseinheit 26 eines Etikettierers 14.

Das Verfahren zum Betrieb einer Etikettier-Fördervorrichtung ist mit verschiedenen Etikettentypen durchführbar. So kann die Etikettenrolle zum Beispiel Linerless Etiketten beinhalten oder Papieretiketten mit Trägerband oder transparente Etiketten, vorzugsweise mit Trägerband. Die Etikettenrollen 18 mit der die drei Etikettierer 14 des Etikettiersystems 12 bestückt sind beinhalten alle die gleichen Etiketten. Die Wäge- und Etikettier-Fördervorrichtung 10 kann jedoch weitere Etikettierer mit anderen Etikettentypen umfassen.

Im Schritt 74 schaltet die Steuerungseinrichtung 48 zwei Etikettierer 14 in einen aktiven Betriebszustand und einen Etikettierer 14 in einen passiven Betriebszustand. In Schritt 76 werden die Artikel 38 aus dem Artikelstrom fortlaufend etikettiert. Dabei applizieren die Etikettierer 14 im aktiven Betriebszustand fortlaufend auf jeden Artikel an einer ersten Applizierstelle ein Etikett. Die erste Applizierstelle ist auf allen Artikel an der gleichen Stelle, ggf. abzüglich einer Toleranz die durch das Etikettieren entsteht. Die beiden Etikettierer 14 im aktiven Betriebszustand etikettieren die Artikel 38 dabei abwechselnd, das heißt, jeder Etikettierer 14 etikettiert jeden zweiten Artikel 38 im Artikelstrom. Periodisch wird in Schritt 78 der Etikettenvorrat auf den Etikettierern 14 im aktiven Betriebszustand nach einem der oben beschriebenen Verfahren bestimmt, wobei der Etikettenvorrat des Etikettierers 14 im passiven Betriebszustand noch bekannt ist, da dieser Etikettierer keine Etiketten verbraucht hat. Die Etikettenvorräte der drei Etikettierer 14 werden in Schritt 10 durch die Vergleichseinheit 50 zu einander ins Verhältnis gesetzt. Bei Erreichen eines bestimmten Verhältnisses der Etikettenvorräte der Etikettierer 14 wird in Schritt 82 die Etikettier-Fördervorrichtung 10 vom Normalbetrieb in einen Übergangsbetrieb überführt, in dem ein Etikettierer 14 im aktiven Betriebszustand in den passiven Betriebszustand überführt wird und der Etikettierer 14 im passiven Betriebszustand in den aktiven Betriebszustand überführt wird. Dann wird die Etikettier-Fördervorrichtung wieder in den Normalbetrieb überführt. Die Auswahl des Etikettierers 14, der vom aktiven Betriebszustand in den passiven Betriebszustand überführt wird, wird im Folgenden beschrieben. Nachdem sich die Etikettier-Fördervorrichtung im Normalbetrieb befindet, wird Schritt 76 wieder ausgeführt und die Artikel 38 werden etikettiert. Falls die Vergleichseinheit 50 in Schritt 80 feststellt, dass der Etikettenvorrat eines Etikettierers 14 den unteren Grenzwert erreicht hat, wird in Schritt 84 eine Zustandsmeldung mittels der Meldeeinheit 64 ausgegeben, um dem Bediener zu signalisieren, dass mindestens eine Etikettenrolle gewechselt werden muss. Sodann wird Schritt 76 ausgeführt und dieser Etikettierer 14 wird noch solange weiteretikettieren, bis sein Etikettenvorrat erschöpft ist. Falls die Vergleichseinheit 50 in Schritt 80 feststellt, dass das bestimmte Verhältnis der Etikettenvorräte der Etikettierer 14 nicht erreicht ist, springt das Verfahren zurück zu Schritt 76.

In einer Ausführungsform wird nachdem der Bediener in Schritt 86 eine neue Etikettenrolle in einen Etikettierer 14 eingelegt hat, die Etikettier-Fördervorrichtung ebenfalls in den Übergangsbetrieb versetzt und in Schritt 82 werden sodann die Etikettierer 14 in die zugehörigen aktiven und passiven Betriebszustände versetzt. In einer Ausführungsform wird der Etikettierer 14, in den eine neue Etikettenrolle eingelegt wurde, in den aktiven Betriebszustand versetzt. Der Etikettierer 14 mit dem kleinsten Etikettenvorrat und der Etikettierer 14 mit dem größten Etikettenvorrat werden in den aktiven Betriebszustand versetzt. Falls eine volle Etikettenrolle eingelegt wurde, ist auch in dieser Ausführungsform der Etikettierer 14, in den eine neue Etikettenrolle eingelegt wurde, im aktiven Betriebszustand.

In einer Ausführungsform wird die Zustandsmeldung in Schritt 84 erst dann ausgegeben, wenn der Etikettenvorrat eines Etikettierers 14 erschöpft ist. Sodann wird in Schritt 82 dieser Etikettierer 14 in den passiven Betriebszustand versetzt und der Etikettierer 14, der sich bis dahin im passiven Betriebszustand befindet, wird in den aktiven Betriebszustand versetzt.

In einer Ausführungsform werden in Schritt 74 und in Schritt 82 jeweils der Etikettierer 14 mit dem kleinsten Etikettenvorrat und der Etikettierer mit dem größten Etikettenvorrat in den aktiven Betriebszustand versetzt.

In einer Ausführungsform ist das vorbestimmte Verhältnis in Schritt 80 erreicht, falls ein Etikettierer 14 im aktiven Betriebszustand nur noch die Hälfte der Etiketten einer vollen Etikettenrolle aufweist. In einer Ausführungsform ist das vorbestimmte Verhältnis aber nur erreicht, wenn gleichzeitig eine gewisse Latenzzeit seit dem letzten Übergangsbetrieb verstrichen ist.

In einer Ausführungsform wird in Schritt 74 der Etikettierer 14 mit dem kleinsten Etikettenvorrat in den aktiven Betriebszustand versetzt. Wenn der Etikettenvorrat des Etikettierers 14 mit dem zweitkleinsten Etikettenvorrat größer als die Hälfte der Etiketten einer vollen Etikettenrolle ist, wird dieser Etikettierer in den aktiven Betriebszustand versetzt. Wenn andererseits der Etikettenvorrat des Etikettierers 14 mit dem zweitkleinsten Etikettenvorrat kleiner als die Hälfte der Etiketten einer vollen Etikettenrolle ist, wird der Etikettierer mit dem größten Etikettenvorrat in den aktiven Betriebszustand versetzt. Das vorbestimmte Verhältnis in Schritt 80 zum Einleiten eines Übergangsbetriebs ist erreicht, falls der Etikettenvorrat des Etikettierer mit dem zweitkleinsten Etikettenvorrat um eine erste Vergleichsschwelle kleiner ist als der Etikettenvorrat des Etikettierers mit dem größten Etikettenvorrat und unter der Hälfte einer vollen Etikettenrolle ist. In Schritt 80 wird der Etikettierer mit dem zweitkleinsten Etikettenvorrat in den passiven Betriebszustand geschaltet. Die erste Vergleichsschwelle ist hierbei ein Parameter zum Einstellen des Etikettiersystems 12.

In einer Ausführungsform wird in Schritt 74 einer der beiden Etikettierer 14 mit dem größten Etikettenvorrat in den aktiven Betriebszustand versetzt und der Etikettierer mit dem kleinsten Etikettenvorrat wird ebenfalls in den aktiven Betriebszustand versetzt. Das vorbestimmte Verhältnis in Schritt 80 ist dann erreicht, falls der Etikettenvorrat eines der Etikettierer 14 im aktiven Betriebszustand um eine zweite Vergleichsschwelle kleiner ist als der Etikettenvorrat des Etikettierers im passiven Betriebszustand. Dabei ist dieses Kriterium nur erfüllt, falls der Etikettenvorrat zum Zeitpunkt t eines der Etikettierers 14 im aktiven Betriebszustand noch nicht um eine zweite Vergleichsschwelle kleiner ist und zum Zeitpunkt t + delta-t der Etikettenvorrat dieses Etikettierers 14 um diese zweite Vergleichsschwelle kleiner ist, wobei t + delta-t zeitlich kurz nach dem Zeitpunkt t anzusiedeln ist. Dieser Etikettierer 14 wird in den passiven Betriebszustand geschaltet.

In einer Ausführungsform wird eine Information über die Umrüstzeit des Bedieners zum Wechsel der Etikettenrolle bereitgestellt. Die Umrüstzeit setzt sich aus der Zeit zusammen, der der Bediener durchschnittlich für diese Aufgabe benötigt und beinhaltet auch die Zeit, die er benötigt um eine neue Etikettenrolle bereitzustellen, zum Beispiel indem er sie im Lager holt. Des Weiteren beinhaltet diese Umrüstzeit eine Sicherheitszeit, die definiert werden kann, falls der Bediener den Etikettenwechsel nicht in der dafür veranschlagten durchschnittlichen Wechselzeit schafft. Die Vergleichseinheit berechnet hieraus die Anzahl der Etiketten, die der Drucker verbraucht nachdem der Bediener informiert wurde, dass eine Etikettenrolle gewechselt werden muss, bis zu dem Zeitpunkt, wo er den Etikettenrollenwechsel tatsächlich umgesetzt hat. Dieser minimale Etikettenvorrat wird als zweite Vergleichsschwelle definiert. In diesem Verfahren wird, nachdem der Etikettenvorrat eines Etikettierers 14 erschöpft ist, der Etikettenvorrat eines zweiten Etikettierers um diese Umrüstzeit des Bedieners später erschöpft. So kann der Bediener zwei Etikettenrollen direkt nacheinander wechseln.

Die Funktionen verschiedener in den Zeichnungen gezeigter Elemente, inklusive der Funktionsblöcke, können durch dezidierte Hardware oder durch generische Hardware, die in der Lage ist Software auszuführen, im Zusammenhang mit der entsprechenden Software, realisiert werden. Falls die Funktionen mittels eines Prozessors zur Verfügung gestellt werden, können sie durch einen einzigen dezidierten Prozessor, einen einzigen geteilten Prozessor oder mehrere generische Prozessoren, die wiederum geteilt sein können, zur Verfügung gestellt werden. Die Funktionen können, ohne Einschränkung, durch einen digital signal processor (DSP), Netzwerk Prozessor, application specific integrated circuit (ASIC), field programmable gate array (FPGA), read only memory (ROM) mit gespeicherter Software, random access memory (RAM), und nichtflüchtige Speicher zur Verfügung gestellt werden.

## Patentansprüche

1. Verfahren zum Betrieb einer Wäge- und Etikettier-Fördervorrichtung, umfassend eine Transportvorrichtung und ein Etikettiersystem (12), das drei Etikettierer (14) umfasst, wobei jeder Etikettierer einen Drucker, einen Applikator (16), eine Aufnahmeeinrichtung für Etikettenrollen und eine Messeinheit zum Bestimmen der verbleibenden Etiketten auf der Etikettenrolle umfasst, wobei das Verfahren folgende Schritte umfasst:
- bereitstellen einer Information über den Etikettenvorrat jedes Etikettierers (14) des Etikettiersystems (12),
- etikettieren von Artikeln (38), wobei die Artikel (38) eine erste Applizierstelle (42) an der gleichen Stelle der Artikel (38) umfassen, wobei abwechselnd ein erster Etikettierer (14) der sich in einem aktiven Betriebszustand befindet und ein zweiter Etikettierer (14) der sich in einem aktiven Betriebszustand befindet ein Etikett an der ersten Applizierstelle (42) von aufeinanderfolgenden Artikeln (38) applizieren und wobei der dritte Etikettierer (14) in einem passiven Betriebszustand ist,
- periodisches bestimmen des Etikettenvorrats zumindest der aktiven Etikettierer (14),
- bestimmen des Verhältnisses zwischen den Etikettenvorräten der Etikettierer (14),
- bei Erreichen eines vorbestimmten Verhältnisses der Etikettenvorräte der Etikettierer (14), einleiten eines Übergangsbetriebs, und
- im Übergangsbetrieb, umschalten des Etikettierers (14) in einem passiven Betriebszustand in einen aktiven Betriebszustand und umschalten eines Etikettierers (14) in einem aktiven Betriebszustand in einen passiven Betriebszustand und einleiten des Normalbetriebs, wobei der Übergangsbetrieb eingeleitet wird, nachdem ein Etikettierer mit einer neuen Etikettenrolle bestückt wurde, wobei die Etikettierer mit dem größten und mit dem kleinsten Etikettenvorrat in einen aktiven Betriebszustand geschaltet werden und der Etikettierer mit dem mittleren Etikettenvorrat in den passiven Betriebszustand geschaltet wird.

2. Verfahren nach Anspruch 1, **dadurch gekennzeichnet dass** das Verfahren folgende Schritte umfasst:
- feststellen des Erreichens eines unteren Grenzwerts des Etikettenvorrats in mindestens einem Etikettierer, und
- Ausgabe einer ersten Zustandsmeldung.

3. Verfahren nach Anspruch 1 oder 2, **dadurch gekennzeichnet dass** das der Übergangsbetrieb eingeleitet wird, wenn der Etikettenvorrat eines Etikettierers im aktiven Betriebszustand aufgebraucht ist und dass im Übergangsbetrieb, dieser Etikettierer in den passiven Betriebszustand umgeschaltet wird.

4. Wäge- und Etikettier-Fördervorrichtung (10) zum Etikettieren von Artikeln umfassend,
eine Wäge-Fördervorrichtung (34) zum Bestimmen des Gewichts der Artikel,
eine Transportvorrichtung zum Transportieren der Artikel (38),
ein Etikettiersystem zum Etikettieren der Artikel (38),
**dadurch gekennzeichnet dass** das Etikettiersystem (12) drei Etikettierer (14) umfasst, wobei jeder Etikettierer einen Applikator (16) umfasst, wobei die Artikel (38) eine erste Applizierstelle (42) an der gleichen Stelle der Artikel (38) umfassen, wobei jeder Applikator (16) dazu geeignet ist ein Etikett auf der ersten Applizierstelle (42) eines Artikels während des Transports des Artikels über die Transportvorrichtung zu applizieren, und dass von den drei Etikettierern (14) in einem Normalbetrieb zwei Etikettierer (14) in einem aktiven Betriebszustand sind und ein Etikettierer in einem passiven Betriebszustand ist, und dass in einem Normalbetrieb die beiden Etikettierer, die sich im aktiven Betriebszustand befinden aufeinanderfolgende Artikel (38) abwechselnd auf deren ersten Applizierstelle (42) etikettieren, wobei
jeder Etikettierer (14) des Etikettiersystems (12) einen Drucker (22) zum Bedrucken der Etiketten, eine Etikettenaufnahme (20) zum Aufnehmen einer Etikettenrolle mit mehreren Etiketten und eine Messeinheit zum Bestimmen der verbleibenden Etiketten auf der Etikettenrolle umfasst, wobei
das Wäge- und Etikettier-Fördersystem eine Steuerungseinrichtung umfasst, die zwei Etikettierern (14) einen aktiven Betriebszustand und einem Etikettierer (14) einen passiven Betriebszustand in Abhängigkeit des Vorrats auf den Etikettenrollen zuweist, wobei die Steuerungseinrichtung das Etikettiersystem (12) von einem Normalbetrieb in einen Übergangsbetrieb überführt, um die Betriebszustände mindestens eines Etikettierers zu ändern, wobei die Wäge- und Etikettier-Fördervorrichtung derart gestaltet ist, ein Verfahren nach einem der Ansprüche 1 bis 3 auszuführen.

5. Wäge- und Etikettier-Fördervorrichtung nach Anspruch 4,
**dadurch gekennzeichnet dass**
die Steuerungseinrichtung eine Etikettenvorratsberechnungseinheit umfasst, die für jeden Etikettierer (14) aus Verhältnis der Umdrehungen einer Druckwalze der Etikettierer (14) und der Umdrehungen der Etikettenrolle den Etikettenvorrat des Etikettierers (14) berechnet, und dass
die Steuerungseinrichtung eine Vergleichseinheit (50) umfasst, die die berechneten Etikettenvorräte der Etikettierer (14) des Etikettiersystems (12) unter Berücksichtigung mindestens einer Vergleichsschwelle mit einander vergleicht und/oder die berechneten Etikettenvorräte mit einem unteren Grenzwert vergleicht.

6. Wäge- und Etikettier-Fördervorrichtung nach einem der Ansprüche 4 oder 5,
**dadurch gekennzeichnet dass**
die Wäge- und Etikettier-Fördervorrichtung weitere Etikettierer umfasst, die nicht dem Etikettiersystem aus drei Etikettierern zugehören, wobei die weiteren Etikettierer Etiketten auf einem Artikel, jedoch nicht auf der ersten Applizierstelle eines Artikels applizieren.

## Claims

1. Method for operating a weighing and labelling conveying device, comprising a transport device and a labelling system (12) which comprises three labellers (14), wherein each labeller comprises a printer, an applicator (16), a receiving device for label rolls and a measuring unit for determining the remaining labels on the label roll, wherein the method comprises the following steps:
- providing information about the label stock of each labeller (14) of the labelling system (12),
- labelling articles (38), wherein the articles (38) comprise a first application point (42) at the same point of the articles (38), wherein, alternately, a first labeller (14) which is in an active operating state and a second labeller (14) which is in an active operating state apply a label at the first application point (42) of successive articles (38), and wherein the third labeller (14) is in a passive operating state,
- periodically determining the label stock of at least the active labellers (14),
- determining the relationship between the label stocks of the labellers (14),
- when a predetermined relationship between the label stocks of the labellers (14) is reached, initiating a transfer operation, and
- in the transfer operation, switching the labeller (14) that is in a passive operating state into an active operating state and switching a labeller (14) that is in an active operating state into a passive operating state and initiating normal operation, wherein the transfer operation is initiated after a labeller has been filled with a new label roll, wherein the labellers having the largest and having the smallest label stock are switched into an active operating state, and the labeller having the medium label stock is switched into the passive operating state.

2. Method according to Claim 1, **characterized in that** the method comprises the following steps:
- determining that a lower limiting value of the label stock in at least one labeller has been reached, and
- outputting a first status message.

3. Method according to Claim 1 or 2, **characterized in that** the transfer operation is initiated when the label stock of a labeller that is in the active operating state is exhausted, and **in that** this labeller is switched into the passive operating state in the transfer operation.

4. Weighing and labelling conveying device (10) for labelling articles, comprising
a weighing conveying device (34) for determining the weight of the articles,
a transport device for transporting the articles (38),
a labelling system for labelling the articles (38),
**characterized in that** the labelling system (12) comprises three labellers (14), wherein each labeller comprises an applicator (16), wherein the articles (38) comprise a first application point (42) at the same point of the articles (38), wherein each applicator (16) is suitable to apply a label at the first application point (42) of an article during the transport of the article via the transport device, and **in that**, of the three labellers (14) in normal operation, two labellers (14) are in an active operating state and one labeller is in a passive operating state, and **in that** in normal operation, the two labellers which are in the active operating state label successive articles (38) alternately at their first application point (42), wherein
each labeller (14) of the labelling system (12) comprises a printer (22) for printing the labels, a label holder (20) for holding a label roll having a plurality of labels and a measuring unit for determining the remaining labels on the label roll, wherein
the weighing and labelling conveying system comprises a control device which allocates two labellers (14) an active operating state and one labeller (14) a passive operating state, depending on the stock on the label rolls, wherein the control device transfers the labelling system (12) from normal operation into a transfer operation in order to change the operating states of at least one labeller, wherein the weighing and labelling conveying device is configured in such a way as to carry out a method according to one of Claims 1 to 3.

5. Weighing and labelling conveying device according to Claim 4,
**characterized in that** the control device comprises a label stock calculation unit which, for each labeller (14), calculates the label stock of the labeller (14) from the ratio of the rotations of a printing roll of the labeller (14) and the rotations of the label roll, and **in that**
the control device comprises a comparison unit (50), which compares the calculated label stocks of the labellers (14) of the labelling system (12) with one another while taking at least one comparison threshold into account, and/or compares the calculated label stocks with a lower limiting value.

6. Weighing and labelling conveying device according to either of Claims 4 and 5, **characterized in that** the weighing and labelling conveying device comprises further labellers which do not belong to the labelling system of three labellers, wherein the further labellers apply labels to an article but not at the first application point of an article.

## Revendications

1. Procédé de fonctionnement d'un convoyeur à pesage et étiquetage, comprenant un dispositif de transport et un système d'étiquetage (12) qui comprend trois étiqueteuses (14), chaque étiqueteuse comprenant une imprimante, un applicateur (16), un module de réception de rouleaux d'étiquettes et une unité de mesure destinée à déterminer les étiquettes restantes sur le rouleau d'étiquettes,
le procédé comprenant les étapes suivantes :
- fournir une information sur la réserve d'étiquettes de chaque étiqueteuse (14) du système d'étiquetage (12),
- étiqueter des articles (38), les articles (38) comprenant un premier emplacement d'application (42) au même emplacement des articles (38), alternativement une première étiqueteuse (14) qui se trouve dans un état de fonctionnement actif et une deuxième étiqueteuse (14) qui se trouve dans un état de fonctionnement actif appliquant une étiquette au premier emplacement d'application (42) d'articles successifs (38) et la troisième étiqueteuse (14) étant dans un état de fonctionnement passif,
- déterminer périodiquement la réserve d'étiquettes au moins des étiqueteuses actives (14),
- déterminer le rapport entre les réserves d'étiquettes des étiqueteuses (14),
- lorsqu'un rapport prédéterminé des réserves d'étiquettes de l'étiqueteuse (14) est atteint, déclencher un fonctionnement transitoire, et
- en fonctionnement transitoire, commuter l'étiqueteuse (14) d'un état de fonctionnement passif à un état de fonctionnement actif et commuter une étiqueteuse (14) d'un état de fonctionnement actif à un état de fonctionnement passif et déclencher le fonctionnement normal, le fonctionnement transitoire étant déclenché après qu'une étiqueteuse a été chargée avec un nouveau rouleau d'étiquettes, les étiqueteuses ayant la plus grande et la plus petite réserve d'étiquettes étant commutées dans un état de fonctionnement actif et l'étiqueteuse ayant la réserve d'étiquettes moyenne étant commutée dans l'état de fonctionnement passif.

2. Procédé selon la revendication 1, **caractérisé en ce que** le procédé comprend les étapes suivantes :
- déterminer qu'une valeur limite inférieure de la réserve d'étiquettes a été atteinte dans au moins une étiqueteuse, et
- délivrer un premier message d'état.

3. Procédé selon la revendication 1 ou 2, **caractérisé en ce que** le fonctionnement transitoire est déclenché lorsque la réserve d'étiquettes d'une étiqueteuse dans l'état de fonctionnement actif est épuisée et **en ce que**, dans le fonctionnement transitoire, cette étiqueteuse est commutée dans l'état de fonctionnement passif.

4. Convoyeur à pesage et étiquetage (10) destiné à étiqueter des articles, ledit convoyeur comprenant un convoyeur à pesage (34) destiné à déterminer le poids des articles,
un dispositif de transport destiné à transporter les articles (38),
un système d'étiquetage destiné à étiqueter les articles (38),
**caractérisé en ce que** le système d'étiquetage (12) comprend trois étiqueteuses (14), chaque étiqueteuse comprenant un applicateur (16), les articles (38) comprenant un premier emplacement d'application (42) au même emplacement des articles (38), chaque applicateur (16) étant adapté pour appliquer une étiquette au premier emplacement d'application (42) d'un article pendant le transport de l'article par le biais du dispositif de transport, et **en ce que**, sur trois étiqueteuses (14) en fonctionnement normal, deux étiqueteuses (14) sont dans un état de fonctionnement actif et une étiqueteuse est dans un état de fonctionnement passif, et **en ce que**, en fonctionnement normal, les deux étiqueteuses qui sont dans l'état de fonctionnement actif étiquettent alternativement des articles successifs (38) à leur premier emplacement d'application (42),
chaque étiqueteuse (14) du système d'étiquetage (12) comprenant une imprimante (22) destinée à imprimer les étiquettes, un porte-étiquette (20) destiné à recevoir un rouleau d'étiquettes pourvu d'une pluralité d'étiquettes et une unité de mesure destinée à déterminer les étiquettes restantes sur le rouleau d'étiquettes,
le système de transport à pesage et étiquetage comprenant un module de commande qui assigne un état de fonctionnement actif à deux étiqueteuses (14) et un état de fonctionnement passif à une étiqueteuse (14) en fonction de la réserve sur les rouleaux d'étiquettes, le module de commande transférant le système d'étiquetage (12) d'un fonctionnement normal dans fonctionnement transitoire pour modifier les états de fonctionnement d'au moins une étiqueteuse, le convoyeur à pesage et étiquetage étant conçu pour mettre en œuvre un procédé selon l'une des revendications 1 à 3.

5. Convoyeur à pesage et étiquetage selon la revendication 4,
**caractérisé en ce que**
le module de commande comprend une unité de calcul de réserve d'étiquettes qui calcule la réserve d'étiquettes de l'étiqueteuse (14) pour chaque étiqueteuse (14) à partir du rapport des rotations d'un rouleau presseur de l'étiqueteuse (14) et des rotations du rouleau d'étiquettes, et **en ce que**
le module de commande comprend une unité de comparaison (50) qui compare entre elles les réserves d'étiquettes calculées des étiqueteuses (14) du système d'étiquetage (12) en tenant compte d'au moins un seuil de comparaison et/ou qui compare les réserves d'étiquettes calculés à une valeur limite inférieure.

6. Convoyeur à pesage et étiquetage selon l'une des revendications 4 ou 5, **caractérisé en ce que** le convoyeur à pesage et étiquetage comprend des étiqueteuses supplémentaires qui n'appartiennent pas au système d'étiquetage comprenant trois étiqueteuses, les étiqueteuses supplémentaires appliquant des étiquettes sur un article, mais pas au premier emplacement d'application d'un article.
